# EUROPÄISCHE PATENTSCHRIFT

(11) **EP 3 873 756 B1**
(45) Veröffentlichungstag und Bekanntmachung des Hinweises auf die Patenterteilung: **19.04.2023**
(21) Anmeldenummer: 19801735.2
(22) Anmeldetag: 30.10.2019
(51) Int. Cl.: B60K 1/00, B60K 17/02, B60K 17/04

(54) **ELEKTRISCHE ANTRIEBSACHSE EINES FAHRZEUGES**
ELECTRIC DRIVE AXLE OF A VEHICLE
ESSIEU MOTEUR ÉLECTRIQUE D'UN VÉHICULE

(30) Priorität: 30.10.2018 DE 102018218535
(43) Veröffentlichungstag der Anmeldung: 08.09.2021
(73) Patentinhaber: ZF Friedrichshafen AG, 88046 Friedrichshafen (DE)
(72) Erfinder: FÜHRER, Kim, 88131 Lindau (DE); DEMMERER, Stephan, 88142 Wasserburg (Bodensee) (DE); WINKEL, Matthias, 88250 Weingarten (DE); WINKLER, Johannes, 88069 Tettnang (DE); RUIDER, Martin, 92447 Schwarzhofen (DE)
(86) Internationale Anmeldenummer: PCT/EP2019/079685
(87) Internationale Veröffentlichungsnummer: WO 2020/089304

(56) Entgegenhaltungen:
- EP-A1- 2 532 546
- EP-A2- 2 696 104
- DE-A1- 10 133 695
- DE-A1-102015 101 042

## Beschreibung

Die vorliegende Erfindung betrifft eine elektrische Antriebsachse eines Fahrzeuges mit einer Parksperre und mit zumindest einem elektrischen Antrieb gemäß der im Oberbegriff des Patentanspruchs 1 näher definierten Art.

Beispielsweise aus der Druckschrift DE 10 2015 119 075 A1 ist ein elektronisches Antriebsmodul eines Fahrzeuges mit einem Elektromotor bekannt, der über einen einer Zwischenwelle zugeordneten Getriebe-Zahnradsatz mit einer Differentialbaugruppe zum Antrieb von Abtriebswellen des Fahrzeuges gekoppelt ist. Um den Elektromotor von der Differentialbaugruppe zu entkoppeln, ist ein Kupplungsmechanismus einer Zwischenwelle des Getriebe-Zahnradsatz zugeordnet.

Die EP2532546A1 sowie die EP2696104A2 offenbaren jeweils einen elektrischen Antriebsstrang für ein Kraftfahrzeug, mit einer Getriebeanordnung, wobei eine Kraftübertragung von einer Getriebeeingangs- zu einer Getriebeausgangswelle über eine Zwischenwelle erfolgt und der Zwischenwelle eine Kupplungsanordnung sowie eine Parksperre zugeordnet ist.

Wenn eine Parksperre zum Sperren des Abriebes des Fahrzeuges bei Fahrzeugstillstand der Zwischenwelle zugeordnet ist, ergibt sich das Problem, dass die Parksperre bei geöffnetem Kupplungsmechanismus an der Zwischenwelle nicht den Abtrieb blockieren kann.

Der vorliegenden Erfindung liegt die Aufgabe zugrunde, eine elektrische Antriebsachse der eingangs beschriebenen Gattung vorzuschlagen, bei der einerseits eine Entkopplung des elektrischen Antriebes ermöglicht wird und zudem die Parksperre unabhängig von der Entkopplung wirksam ist.

Diese Aufgabe wird erfindungsgemäß durch die Merkmale des Patentanspruchs 1 gelöst, wobei sich vorteilhafte und beanspruchte Weiterbildungen aus den Unteransprüchen und der Beschreibung sowie den Zeichnungen ergeben.

Demzufolge wird eine elektrische Antriebsachse eines Fahrzeuges mit einer Parksperre und mit zumindest einem elektrischen Antrieb mit einem Antriebsrad einer Antriebswelle vorgeschlagen, wobei das Antriebsrad über zumindest ein Zwischenrad einer Zwischenwelle mit einem Abtriebsrad eines Differentialgetriebes zum Antrieb zumindest einer Abtriebswelle gekoppelt ist. Um eine Entkopplung des Abriebes bzw. des Differentialgetriebes und gleichzeitig die Funktionsweise der Parksperre unabhängig von der Entkopplung sicherzustellen, ist vorgesehen, dass zum Entkoppeln des elektrischen Antriebes zumindest ein Klauenschaltelement der Antriebswelle und/oder der Zwischenwelle derart zugeordnet ist, dass das Klauenschaltelement in Kraftflussrichtung ausgehend von dem elektrischen Antrieb zum Differentialgetriebe vor der Parksperre angeordnet ist.

Auf diese Weise werden mit der erfindungsgemäßen elektrischen Antriebsachse die Vorteile einer Entkoppelung des elektrischen Antriebes in vorbestimmten Betriebszuständen mit den Vorteilen einer wirksamen Parksperre unabhängig von dem Zustand des Klauenschaltelementes miteinander kombiniert.

Bei einem elektrischen Antrieb gibt es Betriebspunkte, bei denen der Rotor bzw. das Antriebsrad vom Antriebsstrang abgekoppelt werden muss, beispielsweise wenn die Fahrzeuggeschwindigkeit des Fahrzeuges zu hoch wird, sodass eine kritische Rotordrehzahl erreicht wird. Aber auch in Betriebszuständen, bei denen sich der Elektromotor weder im motorischen noch im generatorischen Betrieb befindet. In diesem Betriebszustand können durch Abkoppelung des Antriebs Schleppverluste reduziert werden. Das Klauenschaltelement soll keine zusätzlichen Schleppverluste im geöffneten Zustand erzeugen. Zudem soll sichergestellt werden, dass die Parksperre bei stehendem Fahrzeug wirksam geschlossen werden kann. Beim Einlegen der Parksperre eines Automatikgetriebes werden das Fahrzeug und der elektrische Antrieb schlagartig über die einfallende Sperrklinke der Parksperre auf Stillstand abgebremst. Die Bewegungsenergie des Fahrzeuges und die Drehenergie vom Rotor bzw. vom Abtriebsrad müssen innerhalb kürzester Zeit abgebaut werden. Diese Einfallstöße werden minimiert, da sich das Klauenschaltelement in Kraftflussrichtung vor der Parksperre befindet.

Diese vorteilhafte Anordnungsreihenfolge von Klauenschaltelement und Parksperre ermöglicht, dass das Klauenschaltelement im nicht verbundenen bzw. geöffneten Zustand die Antriebswelle von der Zwischenwelle entkoppelt und dass die Parksperre im eingelegten Zustand unabhängig von dem Klauenschaltelement die mit dem Differentialgetriebe verbundene Zwischenwelle festsetzt.

Es ist offenbart, dass die vorgeschlagene Anordnungsreihenfolgekonstruktiv auf verschiedene Weisen realisiert werden kann. Wenn beispielsweise das Klauenschaltelement der Zwischenwelle zugeordnet ist, kann vorgesehen sein, dass eine axial verschiebbare Schaltklaue des Klauenschaltelementes koaxial zur Zwischenwelle angeordnet ist und mit einer Mitnahmeverzahnung der Zwischenwelle in Eingriff bringbar ist. Bei dieser Ausführung kann die Schaltklaue mit dem als Losrad ausgeführten Zwischenrad verbunden sein. Hierbei ist es möglich, dass diese ein gemeinsames Bauteil oder mehrere miteinander verbundene Bauteile sind, die jeweils als Losräder ausgeführt sind. Ein Parksperrenrad der Parksperre ist bei dieser Ausführung als Festrad der Zwischenwelle ausgeführt und mit der Sperrklinke der Parksperre in Wirkverbindung bringbar. Auf diese Weise ist Abtrieb unabhängig von dem elektrischen Antrieb festsetzbar.

Wenn erfindungsgemäß das Klauenschaltelement der Antriebswelle bzw. Motorwelle des elektrischen Antriebes zugeordnet ist, ist vorgesehen, dass die axial verschiebbare Schaltklaue des Klauenschaltelements koaxial zur Antriebswelle angeordnet ist und mit einer Mitnahmeverzahnung der Antriebswelle in Eingriff bringbar ist. Vorteilhaft ist die Schaltklaue mit dem als Losrad ausgeführten Antriebsrad verbunden. Das Parksperrenrad der Parksperre ist erfindungsgemäß als Losrad der Antriebswelle ausgeführt und mit einer Sperrklinke der Parksperre in Wirkverbindung bringbar und das Zwischenrad ist als Festrad der Zwischenwelle ausgeführt. Auf diese Weise ist der Abtrieb auch bei dieser Ausführung unabhängig von dem elektrischen Antrieb festsetzbar. Weiterhin ist gezeigt, dass es auch denkbar ist, dass die Parksperre der Zwischenwelle zugeordnet ist, um den Abtrieb zu blockieren.

Im Rahmen einer vorteilhaften Weiterbildung der Erfindung kann vorgesehen sein, dass zur axialen Betätigung der Schaltklaue eine mit der Schaltklaue in Wirkverbindung stehende Schaltgabel oder dergleichen vorgesehen ist, die zum Beispiel über einen elektromotorischen Aktor betätigbar ist.

Vorzugsweise kann bei der vorliegenden Erfindung das Differentialgetriebe als Hinterachsen-Differential des Fahrzeuges ausgeführt werden, sodass über die Abtriebswellen des Differentialgetriebes die Hinterräder der Hinterachse des Fahrzeuges antreiben. Es ist aber auch möglich, dass das Differential des Fahrzeuges als Vorderachsen-Differential ausgeführt ist.

Nachfolgend wird die vorliegende Erfindung anhand der Zeichnungen weiter erläutert. Es zeigen:
Figur 1 eine schematische Ansicht einer ersten Ausführungsvariante einer elektrischen Antriebsachse eines Fahrzeuges mit einem Klauenschaltelement und einer Parksperre an einer Zwischenwelle;
Figur 2 eine schematische Ansicht einer zweiten Ausführungsvariante der elektrischen Antriebsachse mit dem Klauenschaltelement und der Parksperre an einer Antriebswelle; und
Figur 3 eine schematische Ansicht einer Variante der zweiten Ausführungsvariante der elektrischen Antriebsachse mit der Parksperre an der Zwischenwelle.

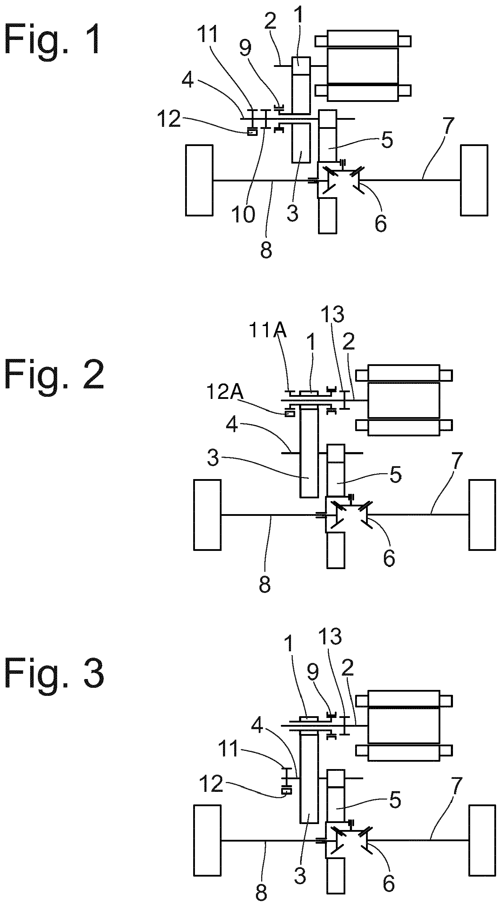

In den Figuren 1 bis 3 sind verschiedene Ausführungen einer elektrischen Antriebsachse mit einem Klauenschaltelement zum Entkoppeln des elektrischen Antriebes EM und mit einer Parksperre zum Blockieren des Abtriebes des Fahrzeuges beispielhaft dargestellt.

Die erfindungsgemäße elektrische Antriebsachse umfasst eine Parksperre und zumindest einen elektrischen Antrieb EM mit einem Antriebsrad bzw. Rotor 1 einer Antriebswelle bzw. Rotorwelle 2, wobei der elektrische Antrieb EM als elektrische Maschine sowohl motorisch als auch generatorisch antreibbar ist. Das Antriebsrad 1 ist beispielsweise über zumindest ein Zwischenrad 3 einer Zwischenwelle 4 mit einem Abtriebsrad 5 beispielsweise über eine zweistufige Stirnradverzahnung oder dergleichen oder auch direkt mit dem Differentialgetriebe 6 zum Antrieb einer ersten Abtriebswelle 7 und einer zweiten Abtriebswelle 8 gekoppelt, die beispielsweise die Hinterräder einer Hinterachse des Fahrzeuges antreiben.

Zum Entkoppeln des elektrischen Antriebes EM ist beispielhaft ein Klauenschaltelement der Antriebswelle 2 und/oder der Zwischenwelle 4 derart zugeordnet, dass das Klauenschaltelement in Kraftflussrichtung ausgehend von dem elektrischen Antrieb EM zum Differentialgetriebe 6 vor der Parksperre angeordnet ist. Demzufolge entkoppelt das Klauenschaltelement im nicht verbundenen bzw. geöffneten Zustand die Antriebswelle 2 von der Zwischenwelle 4 und die Parksperre legt im eingelegten Zustand unabhängig von dem Klauenschaltelement die mit dem Differentialgetriebe 6 verbundene Zwischenwelle 4 fest.

Bei einer ersten Ausführungsvariante gemäß Figur 1 ist sowohl das Klauenschaltelement als auch die Parksperre der Zwischenwelle 4 zugeordnet. Hierzu ist eine axial verschiebbare Schaltklaue 9 des Klauenschaltelementes koaxial zur Zwischenwelle 4 angeordnet und mit einer Mitnahmeverzahnung 10 der Zwischenwelle 4 in Eingriff bringbar. Die Schaltklaue 9 ist mit dem als Losrad ausgeführten Zwischenrad 3 verbunden. Ein Parksperrenrad 11 der Parksperre ist als Festrad der Zwischenwelle 4 ausgeführt und mit einer gehäusefesten Sperrklinke 12 der Parksperre in Wirkverbindung bringbar, um den Abtrieb bzw. die Abtriebswellen 7, 8 festzusetzen.

Demzufolge ist die Trennstelle im Antriebsstrang der elektrischen Antriebsachse auf der Zwischenwelle 4 untergebracht. An dieser Stelle herrschen moderate Drehmomente und Drehzahlen. Bei geöffneter Schaltklaue 9 ergeben sich keine Schleppmoment und Verluste. Zudem kann die Trennstelle bzw. die Schaltklaue 9 auch bei stehendem Fahrzeug geschlossen werden.

In Figur 2 ist eine zweite Ausführungsvariante dargestellt, bei der sowohl das Klauenschaltelement als auch die Parksperre der Antriebswelle 2 zugeordnet sind. Hierzu ist die axialverschiebbare Schaltklaue 9A des Klauenschaltelements koaxial zur Antriebswelle 2 angeordnet und mit einer Mitnahmeverzahnung 13 der Antriebswelle 2 in Eingriff bringbar. Die Schaltklaue 9A ist mit dem als Losrad ausgeführten Antriebsrad 1 verbunden. Das Parksperrenrad 11A der Parksperre ist als Losrad der Antriebswelle 2 ausgeführt und mit der Sperrklinke 12A der Parksperre in Wirkverbindung bringbar, wobei das Zwischenrad 3 als Festrad der Zwischenwelle 4 ausgeführt.

Demzufolge ist die Trennstelle im Antriebsstrang der elektrischen Antriebsachse auf der Antriebswelle bzw. Rotorwelle 2 untergebracht. Die Abkopplung erfolgt somit auf der Antriebswelle 2 über die Schaltklaue 9A. Bei geöffneter Schaltklaue 9A entstehen keine Schleppmoment und Verluste. Auf der Antriebswelle 2 sind die Drehmomente kleiner als auf der Zwischenwelle 4. Dadurch sind die Bauteilbelastungen am geringsten für die beteiligten Komponenten. Diese lassen sich damit kleiner und gewichtssparende ausführen. Zum Einlegen der Parksperre kann bei dieser Ausführung vorteilhaft das Antriebsrad 1 bzw. die Antriebswelle 2 des elektrischen Antriebes EM vorher abgekoppelt werden. Die Massenträgheit der Antriebswelle 2 wirken dann beim Einfallen der Sperrklinke 12A nicht mehr auf das Parksperrensystem und müssen somit nicht von diesem abgebremst werden. Demzufolge werden die Bauteile der Parksperre deutlich weniger stark belastet.

In Figur 3 ist eine weitere Ausführungen der zweiten Ausführungsvariante gemäß Figur 2 dargestellt, bei der im Unterschied zur Ausführung gemäß Figur 2 vorgesehen ist, dass das Parksperrenrad 11 der Parksperre als Festrad der Zwischenwelle 4 ausgeführt ist und mit der Sperrklinke 12 der Parksperre in Wirkverbindung bringbar ist, wobei das Zwischenrad 3 als Festrad der Zwischenwelle 4 ausgeführt.

Beispielhaft ist das Differentialgetriebe 6 bei sämtlichen Ausführungsvarianten gemäß Figur 1 bis 3 als Hinterachsen-Differential des Fahrzeuges ausgeführt.

### Bezugszeichen

- 1: Antriebsrad bzw. Rotor
- 2: Antriebswelle bzw. Rotorwelle
- 3: Zwischenrad
- 4: Zwischenwelle
- 5: Abtriebsrad
- 6: Differentialgetriebe
- 7: erste Abtriebswelle
- 8: zweite Abtriebswelle
- 9,9A: Schaltklaue
- 10: Mitnahmeverzahnung der Zwischenwelle
- 11,11A: Parksperrenrad
- 12,12A: Sperrklinke
- 13: Mitnahmeverzahnung der Antriebswelle
- EM: elektrischer Antrieb

## Patentansprüche

1. Elektrische Antriebsachse eines Fahrzeuges mit einer Parksperre und mit zumindest einem elektrischen Antrieb (EM) mit einem Antriebsrad (1) einer Antriebswelle (2), wobei das Antriebsrad (1) über zumindest ein Zwischenrad (3) einer Zwischenwelle (4) mit einem Abtriebsrad (5) eines Differentialgetriebes (6) zum Antrieb zumindest einer Abtriebswelle (7, 8) gekoppelt ist, wobei zum Entkoppeln des elektrischen Antriebes (EM) zumindest ein Klauenschaltelement der Antriebswelle (2) und/oder der Zwischenwelle (4) derart zugeordnet ist, dass das Klauenschaltelement in Kraftflussrichtung ausgehend von dem elektrischen Antrieb (EM) zum Differentialgetriebe (6) vor der Parksperre angeordnet ist , **dadurch gekennzeichnet, dass** eine axialverschiebbare Schaltklaue (9, 9A) des Klauenschaltelementes koaxial zur Antriebswelle (2) angeordnet ist und mit einer Mitnahmeverzahnung (13) der Antriebswelle (2) in Eingriff bringbar ist und ein Parksperrenrad (11, 11A) der Parksperre als Losrad der Antriebswelle (2) ausgeführt ist und mit der Sperrklinke (12, 12A) der Parksperre in Wirkverbindung bringbar ist und dass das Zwischenrad (3) als Festrad der Zwischenwelle (4) ausgeführt ist.

2. Elektrische Antriebsachse nach Anspruch 1, **dadurch gekennzeichnet, dass** das Klauenschaltelement im nicht verbundenen Zustand die Antriebswelle (2) von der Zwischenwelle (4) entkoppelt und dass die Parksperre im eingelegten Zustand unabhängig von dem Klauenschaltelement die mit dem Differentialgetriebe (6) verbundene Zwischenwelle (4) festsetzt.

3. Elektrische Antriebsachse nach Anspruch 1 oder 2, **dadurch gekennzeichnet, dass** die Schaltklaue (9A) mit dem als Losrad ausgeführten Antriebsrad (1) verbunden ist.

4. Elektrische Antriebsachse nach einem der vorangehenden Ansprüche, **dadurch gekennzeichnet, dass** zur axialen Betätigung der Schaltklaue (9, 9A) eine mit der Schaltklaue (9, 9A) in Wirkverbindung stehende Schaltgabel vorgesehen ist, die über einen elektromotorischen Aktor betätigbar ist.

5. Elektrische Antriebsachse nach einem der vorangehenden Ansprüche, **dadurch gekennzeichnet, dass** das Differentialgetriebe (6) als Hinterachsen- Differential des Fahrzeuges ausgeführt ist.

## Claims

1. Electric drive axle of a vehicle having a parking lock and having at least one electric drive (EM) with a drive gear (1) of a drive shaft (2), wherein the drive gear (1) is coupled via at least one intermediate gear (3) of an intermediate shaft (4) to an output gear (5) of a differential gear mechanism (6) to drive at least one output shaft (7, 8), wherein, to decouple the electric drive (EM), at least one claw shifting element is assigned to the drive shaft (2) and/or the intermediate shaft (4) in such a way that the claw shifting element is arranged upstream of the parking lock in the power flow direction starting from the electric drive (EM) to the differential gear mechanism (6), **characterized in that** an axially displaceable shifting claw (9, 9A) of the claw shifting element is arranged coaxially with the drive shaft (2) and can be brought into engagement with driver toothing (13) of the drive shaft (2), and a parking lock gear (11, 11A) of the parking lock is designed as an idler gear of the drive shaft (2) and can be brought into operative connection with the locking pawl (12, 12A) of the parking lock, and **in that** the intermediate gear (3) is designed as a fixed gear of the intermediate shaft (4).

2. Electric drive axle according to Claim 1, **characterized in that**, in the disengaged state, the claw shifting element uncouples the drive shaft (2) from the intermediate shaft (4), and **in that**, in the engaged state, the parking lock fixes the intermediate shaft (4) connected to the differential gear mechanism (6) independently of the claw shifting element.

3. Electric drive axle according to Claim 1 or 2, **characterized in that** the shifting claw (9A) is connected to the drive gear (1) designed as an idler gear.

4. Electric drive axle according to one of the preceding claims, **characterized in that** for the axial actuation of the shifting claw (9, 9A), a shifting fork that is operatively connected to the shifting claw (9, 9A) and can be actuated via an electric-motor actuator is provided.

5. Electric drive axle according to one of the preceding claims, **characterized in that** the differential gear mechanism (6) is designed as a rear-axle differential of the vehicle.

## Revendications

1. Essieu moteur électrique d'un véhicule, comprenant un frein de stationnement et au moins un entraînement électrique (EM) pourvu d'une roue motrice (1) et d'un arbre d'entraînement (2), dans lequel la roue motrice (1) est accouplée par l'intermédiaire d'au moins une roue intermédiaire (3) d'un arbre intermédiaire (4) à une roue menée (5) d'un engrenage différentiel (6) pour entraîner au moins un arbre de sortie (7, 8), dans lequel, pour le désaccouplement de l'entraînement électrique (EM), au moins un élément de commutation à crabots est associé à l'arbre d'entraînement (2) et/ou à l'arbre intermédiaire (4) de telle sorte que l'élément de commutation à crabots est disposé devant le frein de stationnement dans la direction du flux de force allant de l'entraînement électrique (EM) à l'engrenage différentiel (6),
**caractérisé en ce qu'**un crabot de commutation (9, 9A) axialement coulissant de l'élément de commutation à crabots est disposé coaxialement à l'arbre d'entraînement (2) et peut être mis en prise avec une denture d'entraînement (13) de l'arbre d'entraînement (2), et une roue de frein de stationnement (11, 11A) du frein de stationnement est réalisée sous la forme d'une roue libre de l'arbre d'entraînement (2) et peut être mise en relation fonctionnelle avec le cliquet d'arrêt (12, 12A) du frein de stationnement, et **en ce que** la roue intermédiaire (3) est réalisée sous la forme d'une roue fixe de l'arbre intermédiaire (4).

2. Essieu moteur électrique selon la revendication 1, **caractérisé en ce qu'**à l'état non relié, l'élément de commutation à crabots désaccouple l'arbre d'entraînement (2) de l'arbre intermédiaire (4), et **en ce qu'**à l'état engagé, le frein de stationnement immobilise indépendamment de l'élément de commutation à crabots l'arbre intermédiaire (4) relié à l'engrenage différentiel (6).

3. Essieu moteur électrique selon la revendication 1 ou 2, **caractérisé en ce que** le crabot de commutation (9A) est relié à la roue d'entraînement (1) réalisée sous forme de roue libre.

4. Essieu moteur électrique selon l'une quelconque des revendications précédentes, **caractérisé en ce que** pour l'actionnement axial du crabot de commutation (9, 9A), une fourchette de commande en relation fonctionnelle avec le crabot de commutation (9, 9A) est prévue qui peut être actionnée par l'intermédiaire d'un actionneur électromoteur.

5. Essieu moteur électrique selon l'une quelconque des revendications précédentes, **caractérisé en ce que** l'engrenage différentiel (6) est réalisé sous la forme d'un engrenage différentiel d'essieu arrière du véhicule.
